# EUROPEAN PATENT SPECIFICATION

(11) **EP 4 412 775 B1**
(45) Date of publication and mention of the grant of the patent: **28.01.2026**
(21) Application number: 22797381.5
(22) Date of filing: 03.10.2022
(51) Int. Cl.: B25J 9/16, G05B 19/418, B07C 5/36, B25J 9/00, B25J 15/04, B25J 15/06, B25J 19/02, B25J 9/02, B25J 15/00

(54) **SORTER SYSTEM AND WITH CASCADED ROBOTS AND METHOD**
SORTIERSYSTEM MIT HINTEREINANDERGESCHALTETEN ROBOTERN, SOWIE VERFAHREN
SYSTÈME DE TRI AVEC DES ROBOTS EN CASCADE ET PROCÉDÉ

(30) Priority: 04.10.2021 DK PA202170487
(43) Date of publication of application: 14.08.2024
(73) Proprietor: BEUMER Group A/S, 8200 Aarhus N (DK)
(72) Inventor: WERNER, Andreas, 44267 Dortmund (DE); SKYUM, Henrik Frank, 8370 Hadsten (DK)
(74) Representative: Novagraaf Group
(86) International application number: PCT/EP2022/077436
(87) International publication number: WO 2023/057368

(56) References cited:
- WO-A1-2018/068840
- US-B1- 10 906 188

## Description

### FIELD OF THE INVENTION

The present invention relates to sorter systems for handling objects, specifically objects incoming in a 3D bulk. Specifically, the invention relates to a sorter system with pick and place robots for picking up incoming objects from a feeder and placing them on a running sorter. The sorter system is suitable for such as: handling mail pieces, parcels, baggage, softbags, limp/non-rigid bags, polybags, items handled at a warehouse distribution, and items handled at a mail order distribution centre.

### BACKGROUND OF THE INVENTION

Sorters, such as for sorting mail and/or parcels or the like, normally include a sorter system for transporting items at a constant speed to a discharge position, and in accordance with a code or the like on the individual objects, the objects are received and discharged from the sorter at a given discharge position.

Objects are often inducted to the sorter from a number of inductions which receive an object in one end and they serve to accelerate the object and deliver the object at an empty position on the sorter, e.g. an empty cross belt or tilt tray element. An induction accelerates an object up to a velocity with a directional component parallel with the sorter velocity, which equals or at least approximately equals the sorter velocity. The inductions may be manually loaded with items, i.e. a person picks up individual items from a feeding conveyor, e.g. from a bulk, and places them singulated and oriented on an induction. In sorter systems without automated inductions for handling the induction to the sorter, persons perform the rather unpleasant task of manually inducting objects to the sorter.

Pick and place robot systems may replace humans picking up of objects and placing the object on an induction or directly on a sorter. However, the task of picking up objects which are randomly sized, shaped and textured, and placed in bulk on a continuous moving feeder is a complicated task. Especially, it is complicated for a robot to pick and place such objects from bulk with a high rate of success and at the same time at the high throughput required for typical mail and parcel conveyors.

US 10,906,188 B1 describes a robotic singulation system. Sensor data including image data is used to model a flow of at least a subset of said plurality of items through at least a portion of the workspace. The model is used to determine and implement a plan to autonomously operate a robotic structure to pick one or more items from the workplace and place each item singly in a corresponding location in a singulation conveyance structure.

WO 2018/068840 A1 a method for controlling a velocity of a conveyance path of a system including an industrial robot, a first conveyance path configured to transfer items within a working area of the robot with a velocity, and a second conveyance path configured to transfer empty places within the working area of the robot with a velocity. The method includes obtaining position data for a plurality of items and for a plurality of empty places.

### SUMMARY OF THE INVENTION

In particular, it may be seen as an object of the present invention to provide a reliable, fast and compact sorter system for handling randomly shaped and sized objects in 3D bulk from a feeder and placing the objects on a sorter.

In a first aspect, the invention provides a sorter system according to appended claim 1.

Such sorting system has proven to be capable of providing a high rate of success in picking up objects in 3D bulk from the feeder and placing them directly on the sorter, even when the sorter is running at a high speed, thus providing a high throughput. At the same time, such sorter feeding requires only a limited amount of space, since the need for induction elements between the feeder and the sorter are eliminated.

The robot can be formed by rather simple standard components, and still, due to the defined elements and the defined control system, it has been found that it is possible to pick up an object from the bulk, even though the 3D bulk moves at a constant speed.

With a cascade of pick and place robots, the pick and place task can be distributed to increase overall throughput of the system. According to the invention, the pick and place robot are Cartesian or gantry configured pick and place robots, especially placed with an oblique angle to the sorter, since this has been found to be possible to reliably place objects directly on the sorter while the sorter is running at a high speed, even with standard Cartesian or gantry robotic actuator solutions. In this way, traditional inductions to the sorter can be eliminated.

The invention is based on the insight that a combination of a rather simple input in the form of an image, preferably a 3D image, of incoming objects in 3D before arriving at the pick and place robots is enough to allow suitable processing and control algorithms to distribute picking and placing tasks to the robots to place objects directly on the sorter while the sorter is running.

Especially, an embodiment of the robot system has been tested with an incoming bulk of objects at a constant speed of such as 0.1-1.0 m/s, and with incoming bulk objects of various sizes, shapes and textures, a rate of success of 98-100%, at a speed of up to such as 1,500-2,000 handled objects per hour, depending on the layout of the system and the pick and place distances. The test has been performed with objects including rectangular shaped boxes of various size as well as plastic bags, laminated objects etc. A throughput of more than 2,000 objects per hour may be obtained.

The sorter system has been found to provide a pick and place performance speed and reliability which allows the sorter system to be used for mail pieces, parcels, baggage, items handled at a warehouse distribution, and items handled at a mail order distribution centre etc.

By 'robotic actuator' is generally understood a controllable device with a manipulator arm, preferably having at least 2 joints or axes and being controllable to move the gripper from one position in space to another position in space, i.e. basically the robotic actuator can move the gripper to a controllable position in space.

By 'singulated' is understood objects placed with a distance from each other. Preferably, objects are further placed both singulated and oriented, and by 'oriented' is understood aligned with an orientation of an induction, a conveyor or a sorter or the like.

By 'image of objects' is understood a sensed or measured representation of the physical configuration of objects. Preferably, the image has a sufficient level of detail to identify or classify single objects from a bulk of objects by means of appropriate processing. The image may be a visual image, e.g. obtained by a 2D or 3D camera. However, other technologies may be used as well, e.g. using laser scanners or other scanner technologies providing an image by non-visual sensing or measurement techniques etc.

Even though the sorter system is suited for handling incoming objects in a 3D bulk, it is to be understood that the sorter system can therefore also handle incoming objects in 2D bulk. However, the preferred embodiments that will be described have been tested to function even with randomly shaped and sized objects arriving in 3D bulk on the feeder to the pick and place robots.

In a second unclaimed aspect, the invention provides use of the sorter system according to the first aspect for handling objects comprising at least one of: mail pieces, parcels, baggage, items handled at a warehouse distribution, and items handled at a mail order distribution centre.

In a third aspect, the invention provides a method for feeding a sorter with objects from a feeder transporting objects in a 3D bulk in accordance with appended claim 4.

In further unclaimed aspects, the invention provides:
A mail distribution centre comprising a sorter system according to the first aspect. A parcel or mail order distribution centre comprising a sorter system according to the first aspect.

A baggage handling system comprising a sorter system according to the first aspect.

A warehouse distribution centre comprising a sorter system according to the first aspect.

The above is a non-exhaustive list of applications. It is to be understood that the sorter system may be advantageously used in other applications as well where a bulk of incoming objects should be distributed to a plurality of target locations fully automatically or at least with a limited amount of manual handling only.

The individual aspects of the present invention may each be combined with any of the other aspects. These and other aspects of the invention will be apparent from the following description with reference to the described embodiments.

### BRIEF DESCRIPTION OF THE FIGURES

The invention will now be described in more detail with regard to the accompanying figures. The figures show one way of implementing the present invention and is not to be construed as being limiting to other possible embodiments falling within the scope of the attached claim set.
FIG. 1 illustrates a block diagram of a sorter system embodiment with a cascade of gantry robots at an oblique angle to the parallel sorter and feeder conveyor,
FIG. 2 illustrates another sorter system embodiment with two groups of gantry robots, where each group of robots share a camera to provide images to allow picking of objects,
FIG. 3 illustrates a gantry type robot with a gripper with suction cups in an adjustable and controllable configuration,
FIG. 4a and 4b illustrates a preferred gripper with an adjustable gripper configuration and a rotation and tilting mechanism to allow the gripper to be used with a Cartesian or gantry type robotic actuator,
FIG. 5 illustrates steps of a method embodiment, and
FIG. 6 illustrates a possible special configured robotic actuator with curved tracks.

### DETAILED DESCRIPTION OF AN EMBODIMENT

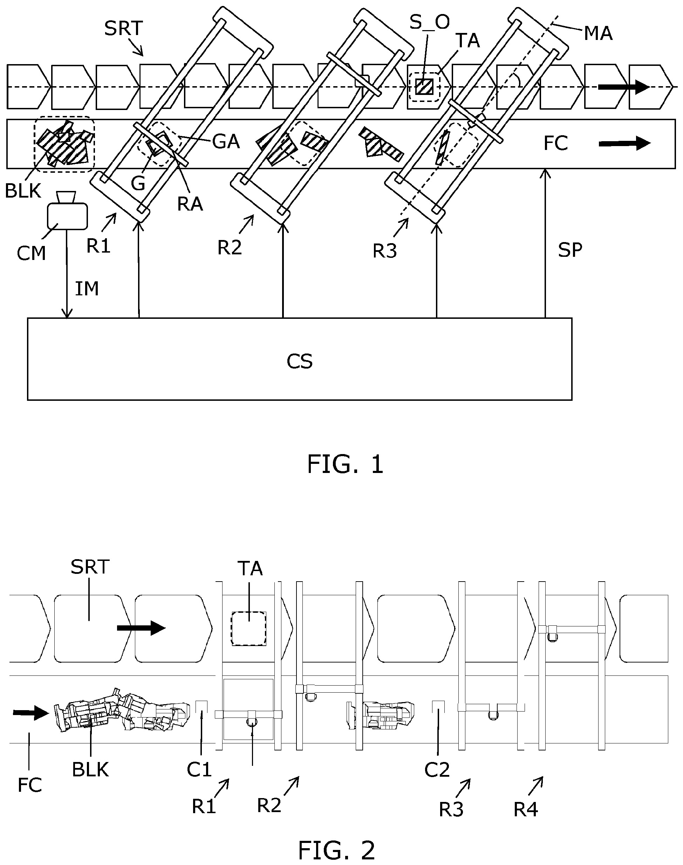

FIG. 1 illustrates a sorter system embodiment with a cascade of three pick and place robot R1, R2, R3 all with a gantry type robotic actuator RA. The robots R1, R2, R3 are arranged along a feeding conveyor FC which transports objects, e.g. randomly sized and shaped objects, to the pick and place robots in 3D bulk BLK. In the illustrations, the feeding conveyor FC is arranged parallel with the sorter SRT. The robots R1, R2, R3 pick objects from their respective gripping areas GA on the feeding conveyor FC, and places them singulated and oriented directly on a target area TA on the sorter SRT. The sorter SRT then transports the objects to discharge stations (not shown), where the objects arrive at their target destination, e.g. according to a bar code or the like attached to the object.

Transport directions of the feeding conveyor FC and sorter SRT are shown with bold arrows, here indicating that these transport directions are the same, but it may be preferred that these transport directions are opposite.

The feeder FC and the sorter SRT may be setup to transport objects on surfaces at the same vertical level, i.e. at the same height. However, it may be preferred that the sorter SRT is setup with its object transport surface at a higher or lower level than the feeder, which may in some installations help to save space for other components. Thus, in such cases, the robots R1, R2, R3 are then expected to pick an object from a gripping area GA at one vertical height and place the object on a target area TA the sorter SRT at another vertical height.

A control system CS serves to receive an image IM, here from a camera CM upstream of a position of the pick and place robots R1, R2, R3. In response to the image IM, the control system selects for each of the plurality of pick and place robots R1, R2, R3 an object to grip. Further, the control system CS determines for each of the plurality of pick and place robots R1, R2, R3 a target position TA on the sorter SRT. Finally, the control system CS controls the respective pick and place robots R1, R2, R3 to grip their respective selected objects to grip from the feeder FC, to move the objects, and to release them at the respective determined target positions TA on the sorter SRT, while the sorter SRT is running.

In FIG. 1 the gantry robots R1, R2, R3 are shown with their axes MA at an oblique angle to the sorter SRT, here shown at an angle of such as 50-60°. The oblique angle facilitates the acceleration of a gripped object up to the speed of the running sorter SRT. This allows the sorter SRT to run at a high, e.g. constant, speed and still allow the robots R1, R2, R3 to accelerate an object up to the speed of the sorter SRT for release of an object S_O at a target area TA, i.e. an empty space, on the sorter SRT.

Each of the pick and place robots R1, R2, R3 comprises a controllable gripper G arranged to engage with a surface of an object to grip the object from the feeder FC. Preferably, the gripper G is mounted onto the gantry robotic actuator RA to allow rotation as well as tilting, whereas the gantry robotic actuator RA serves to provide movement of the gripper G in 3 dimensions. Most preferably, the gripper G has a controllable configuration, so as to adapt its gripping properties to various objects to be gripped, e.g. comprising adjustable arms with controllable actuators, wherein each arm has a suction cup connected to a vacuum system to allow suction gripping on a surface of an object to be gripped.

Especially, the robots R1, R2, R3 may be identical with respect to robotic actuator RA and gripper G. However, to enable gripping of a large variety of objects, the grippers G of the robots R1, R2, R3 may have different gripping properties. E.g. such that one robot R1 has a gripper arranged to grip large objects, while another robot R2 has a smaller gripper arranged to grip small objects. The grippers may be different with respect also to gripping technology, thus some of the robots may have suction cup type grippers while other have gripping fingers or the like.

Still further, the robots R1, R2, R3, or at least a part of the robots R1, R2, R3 may be configured for automatically changing their gripper G, i.e. to change to a gripper with different gripping properties so as to adapt their gripping properties for to the type and shape of incoming objects for optimal gripping efficiency. Especially, one or more of the following properties of incoming objects may be determined by the control system:
1) Information regarding a shape of the object,
2) A horizontal boundary of the object,
3) A size of the object,
4) An orientation of the object,
5) An upper surface curvature of the object,
6) A surface roughness of the object.

Such parameters can then be determined for objects arriving over a period of time, and in response thereto, the gripper may be changed on one or more of the robots R1, R2, R3 to adapt to the actual properties of the incoming objects. Hereby, the robot system can adapt its performance to best possible pick and place performance in case the type of arriving objects changes.

Further, all of or some of the above inputs 1)-6) can be processed by the control system CS to determine gripping configuration algorithm of the grippers G, in embodiments where the grippers G have a controllable gripping configuration to be actuated prior to controlling the actual gripping, e.g. the size or shape of suction cup configuration may be actuated prior to suction gripping of an object, in order to adapt the gripper to the size and shape of the object for placing suction cups near the boundary of the object, e.g. near corners of an upper surface of the object. For irregular objects, the selection of the preferred suction cup position and thus the gripping configuration will be a compromise. For the best grip by suction cups M1, M2 on a curved surface, a smaller gripping configuration may be preferred. For a small object, and assumingly also a light weight object, the gripping configuration may be chosen to best match the surface roughness, e.g. to avoid placing suction cups near wrinkles of an object being a plastic foil covering a piece of clothes.

To take into account any possible movement of the bulk of 3D objects BLK objects caused by the gripping of an object by the first robot R1 in line, it may be preferred to have more image sensors to provide images immediately upstream of each robot R1, R2, R3, or at least it may be preferred to provide an image upstream of each cascade of two robots R1, R2.

Various types of cameras CM or other image sensors exist, but preferably the CM is capable of providing a high quality 3D image allowing a precise identification of shapes to allow identification of separate objects in the 3D bulk BLK, and also with a sufficient precise height dimension to allow precise navigation of the gripper G for gripping the object selected for being gripped. The camera CM may especially be a 3D line camera, a Time of Flight type 3D camera, and a stereo 3D camera. Further, it is to be understood that a 2D camera may be used, where the height dimension of the 3D image IM is computed based on image processing of a 2D photo, or it may be obtained by an alternative technology, e.g. a separate height sensor placed separate from the camera CM.

In some embodiments, a speed of the feeding conveyor FC may be controlled in at least two steps, such as between "stop" and "normal speed". Especially, a speed of the feeding conveyor FC may be controlled in a plurality of steps between "stop" and a maximum speed, such as 2-10 steps between "stop" and a maximum speed. It may be preferred to control the speed of the feeding conveyor FC in response to an estimate of expected pick and place handling capacity of the pick and place robot RA, G in relation to an incoming bulk of objects. A variable speed of the feeding conveyor FC allows the control system CS to ensure that the pick and place robot RA, G can handle a reasonable amount of arriving objects. Especially, the speed of the feeding conveyor FC may be controlled to allow the pick and place robot RA, G to handle all arriving objects BLK, or at least the feeding conveyor FC speed may be controlled so as to allow the pick and place robot RA, G to handle at least a predetermined fraction of incoming objects. Specifically, the be controlled in a "stop and go" manner, to allow the feeding conveyor FC to transport a bulk BLK of objects to the gripping area GA and then stop to allow the pick and place robot RA, G to pick and place a predetermined fraction of the bulk BLK of objects, e.g. all objects in the bulk BLK, before the feeding conveyor FC is controlled to "go" to allow another bulk BLK of objects to arrive to the gripping area GA for handling by the pick and place robot RA, G. Alternatively, the speed of the feeding conveyor FC may be controlled between a plurality of speed steps gradually over time to ensure that the pick and place robot RA, G can handle a predetermined fraction of objects but without stopping the feeding conveyor FC. In some cases it may be acceptable for the pick and place robot RA, G to handle only a fraction of 5-50% of arriving objects, in case it is followed by one or more additional pick and place robot(s) downstream of the feeding conveyor FC, and/or followed by a manual handling station. In such cases, the speed of the feeding conveyor FC may be controlled by the control system CS to ensure a predetermined overall handling capacity of the pick and place system.

Specifically, the control system CS may be arranged to estimate a time required to complete a pick and place operation for one or more objects in a bulk BLK of objects before the bulk BLK of objects arrives at the gripping area GA. Such estimated time, e.g. taking into account identification of the one or more incoming objects as "easy", i.e. less time consuming, or "difficult", i.e. more time consuming, to handle which may be based on a machine learning and/or artificial intelligence input. The control system may then control the speed of the feeding conveyor FC so as to allow the pick and place robot RA, G to have time to handle the acceptable number of objects G_O to be gripped.

The sorter SRT may comprise a plurality of supporting surfaces arranged to move along a track in a transporting direction, wherein the supporting surfaces define empty spaces for receiving and transporting objects or items. However, it is to be understood that the sorter SRT may be of a type as for example: a tilt-tray sorter, a cross-belt sorter, a tote based sorter, a pusher sorter, a shoe sorter, or a pop-up sorter. Especially, the sorter SRT may be a closed loop type of sorter SRT. Especially, the sorter SRT may be arranged to transport objects or items with a speed of at least 0.4 m/s, such as 0.5-1.0 m/s, such as 1.0-1.5 m/s, such as 1.5-2.0 m/s, such as more than 2.0 m/s. Especially, the sorter SRT may be arranged to transport objects or items at a constant speed.

The sorter SRT may be part of a sorter system further comprising a plurality of discharges arranged for receiving items from the sorter SRT, wherein the discharges are arranged at different positions adjacent to the sorter SRT. The sorter system is thus arranged to discharge items from the sorter SRT at discharge locations selected in accordance with an identification code associated with the individual items. E.g. such identification code can be such as: a bar code, a postal code, an ID tag, RFID tag, or the like. By scanning the identification code of an item, the sorter system is capable of sorting the item accordingly.

The control system is preferably arranged to coordinate on which empty places on the sorter SRT to place objects. Further, the control system is preferably arranged to calculate if the robot R1, R2, R3, R4 has sufficient time to reach the position of the empty space on the sorter SRT and deliver the object at a relative velocity to the sorter velocity being close to zero, or at least with a relative speed close to zero.

FIG. 2 illustrates another sorter system embodiment, where four pick and place robots R1, R2, R3, R4 gantry type robots cooperate in picking objects from a 3D bulk of objects BLK transported on a feeding conveyor FC, and placing objects directly on an empty place on a sorter SRT, e.g. while the sorter SRT transports objects at a constant transporting speed. In FIG. 2 the robots R1, R2, R3, R4 are placed with their main axes perpendicular to the sorter SRT transporting direction. As in FIG. 1, the sorter SRT and the feeding conveyor FC are positioned adjacent to each other in parallel and moving in the same direction (bold arrows), at the same or at different speeds. The gantry type robots R1, R2, R3, R4 are mounted, on one side, next to the sorter SRT, and on the opposite side, next to the feeding conveyor FC. E.g. the robots R1, R2, R3, R4 may be mounted on the ground or onto another support.

As seen in FIG. 2, cameras C1, C2 or other image sensor are shared by two robots, namely camera C1 is shared by robots R1, R2, while camera C2 positioned upstream of the robot R3, R4. Thus, hereby an image immediately upstream of the robots can be provided.

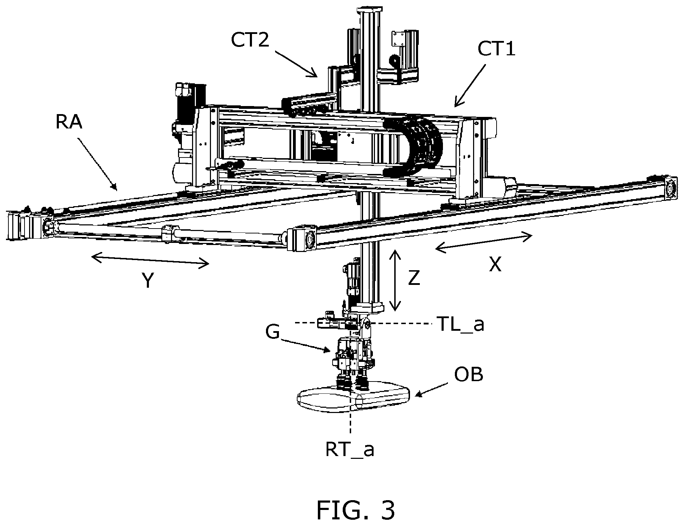

FIG. 3 illustrates a preferred robotic actuator RA in the form of a gantry robotic actuator with an adjustable gripper G with four suction cups, here shown with a gripped object. A set of horizontal elements forming tracks for a controllably movable first cart CT1 arranged to be controllably actuated to move in a horizontal direction X. A controllably movable second cart CT2 is arranged to be controllably actuated to move in another horizontal direction Y on tracks of the first cart CT1.

The gripper G is mounted on a member fixed to the second cart CT2 and is controllably movable in a vertical direction Z to allow height adjustment of the gripper G. The gripper G is shown mounted on this member by a controllable actuator element which allows controllable rotation around a vertical rotation axis RT_a. Further, the gripper is mounted on the member by a controllable actuator element which allows controllable tilting around a horizontal tilting axis TL_a.

The dimension of the various elements of the robotic actuator RA can easily be adapted to the required X, Y, Z distance capacity required for the pick and place robot, and also the strength of the various elements can be adapted for the load of objects to be handled. Various types of actuators for the X, Y, Z direction actuation can be used, as known in the art of gantry type of robots.

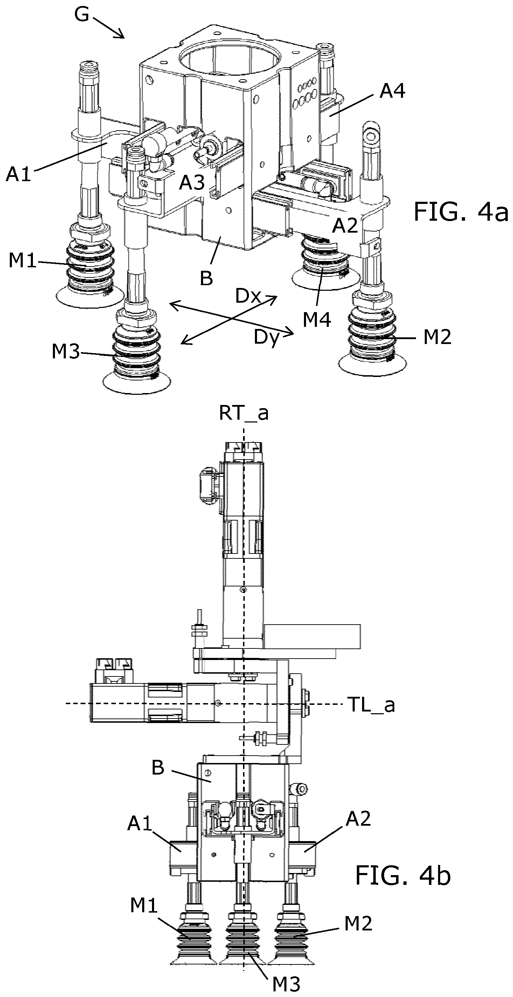

FIGs. 4a and 4b illustrates two views of a preferred gripper G embodiment with a controllable gripping configuration of four gripping members in the form of suction cups M1, M2, M3, M4. In FIG. 4a, the gripper G is shown in the fully extended gripper configuration, i.e. with the suction cups M1, M2, M3, M4 at maximum distance from each other, thus suited for gripping large objects. In FIG. 4b, the gripper is in its fully compressed gripper configuration, i.e. with the suction cups M1, M2, M3, M4 with minimum distance from each other, thus suited for gripping small objects.

A base part B serves for mounting on the robotic actuator, by means of a controllable tilting element for tiling around a tilting axis TL_a, and by means of a controllable rotation element for rotating around a rotation axis RT_a (also seen in FIG. 3). The suction cups M1, M2, M3, M4 are mounted near distal ends of respective elongated arms A1, A2, A3, A4 which are mounted to the base part B. Each arm A1, A2, A3, A4 is slidably arranged along its length relative to the base part B actuated by a controllable actuator. This allows the arm A1, A2, A3, A4 to be controllably adjusted with respect to a position of suction cups M1, M2, M3, M4 relative to the base part B. The suction cups are aligned with their suction contacts form a plane, and wherein the arms A1, A2, A3, A4 are slidably arranged to move along axes Dx, Dy which are parallel to this plane.

Especially, it is seen that arms A1 and A2 are slidably arranged along the same axis Dx, and part of the arms are arranged to slide inside each other. Arms A3, A4 are likewise arranged to slide inside each other, so as to be slidably arranged along axis Dy. Thus, the four arms A1, A2, A3, A4 are arranged to extend in four different directions in one plane, perpendicular to each other. Depending on the chosen type of actuation, all four arms A1, A2, A3, A4 can be actuated separately to allow a high degree of flexibility with respect to gripping configuration, but requiring separate actuators, or the arms A1, A2, A3, A4 can be actuated together, e.g. in pairs. Alternatively, two actuators can be used to actuate the arms A1, A2, A3, A4 in two pairs A1, A2, and A3, A4, and further one single actuator can be used to actuate all four arms A1, A2, A3, A4, thus allowing only limited variation in the gripping configuration. It may be preferred that the actuator(s) e.g. electric motor(s), for the arms is/are mounted above the tiling and rotation points, to allow reduction of weight of the gripper G. In an embodiment, a rotation cable may transfer rotation power from the motor(s) to actuate the arms A1, A2, A3, A4 by means of a gear mechanism inside the base part B. In case of individually adjustable lengths of all four arms A1, A2, A3, A4, various gripping configuration shapes can be made to fit optimal grips for irregular objects.

Such gripper G is flexible and yet compact, since even with a compact base part B, a highly flexible gripping configuration is achieved: from a very compressed and compact configuration occupying a minimum of space outside the dimension of the base part B itself, and to a fully extended gripping configuration which can be used for handling large objects. The gripper G can handle large objects at one point in time, and shortly after, it can be controlled to provide a compressed state gripping configuration to enable the gripper G to enter the space between two large objects for gripping a small object. This allows a high flexibility in the handling of bulk objects.

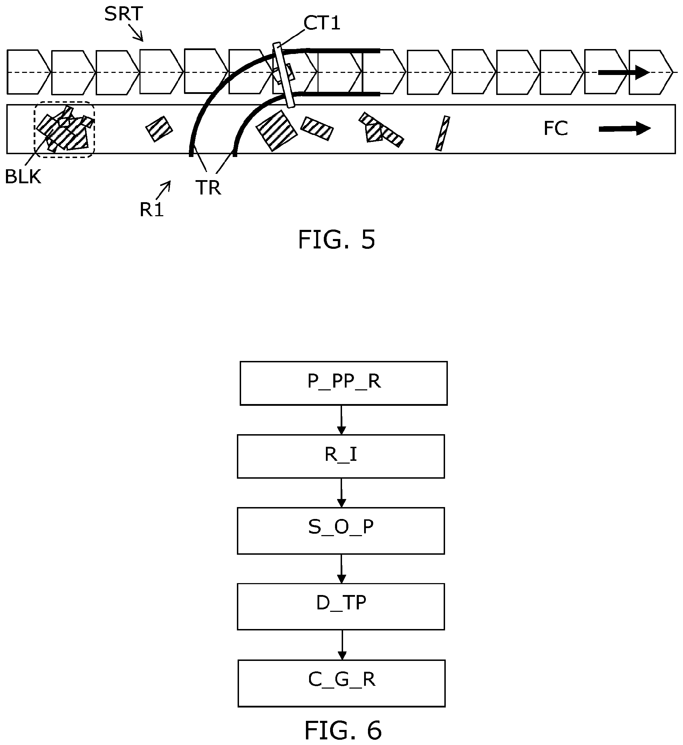

FIG. 5 shows, for simplicity, a single pick and place robot R1 embodiment which can be used for one or more of the plurality of pick and place robots of the sorter system. Especially, if preferred, the principle of the shown gantry robotic actuator RA and gripper G of FIG. 3 may be applied, but instead of the straight tracks for a controllably movable first cart CT1 arranged to be controllably actuated to move in a horizontal direction X, the corresponding horizontal tracks TR of the embodiment of FIG. 5 have a curved portion so as to move the first cart CT1 in both the X and Y direction, thereby bringing the first cart CT1 from a first angle in one end of the tracks TR to another angle at the opposite end of the tracks TR. Especially, this angle may be such as 40-120°, such as 60-100°, such as 70-95°, such as 80-95°, such as 88-92°, or more specifically approximately 90°, and preferably, at one end of the tracks TR FIG. 5 the tracks are parallel with a transporting direction of the sorter SRT, and thus bringing the cart CT1 at an angle perpendicular to the transporting direction of the sorter SRT. Further, it is seen in FIG. 5 that the tracks TR have a curved portion at the picking end at the feeder FC, while the tracks have a straight portion parallel with the sorter SRT transporting direction.

Such robotic actuator design helps to facilitate acceleration of a gripped object from the feeder FC up to the speed of the running sorter SRT, thereby allowing successful placing of the object on the sorter SRT. In the following preferred sub aspects, features and embodiments will be described that may be applied in addition to or alternative to the already described embodiments.

The plurality of pick and place robots comprise respective Cartesian or gantry controllable robotic actuators arranged with their main axes forming oblique angles with an axis along a transport direction of the sorter. Specifically, the respective main axes form angles of 20-80°, 30-70°, such as 40-60°, with an axis along the transport direction of the sorter.

Each of the plurality of controllable robotic actuators may be configured to move the controllable gripper within a horizontal working area defined by a first distance along the main axis, and a second distance along an axis perpendicular to the main axis, wherein the first distance is at least a factor of 2-4 times, such as at least 3 times, the second distance.

In some embodiments the sorter system comprises at least one pick and place robot with a robotic actuator, such as a gantry type robotic actuator, comprising a set of tracks having curved portions, preferably the curved portions are horizontal tracks. Especially, the tracks are curved so as to allow at least end portions of the tracks to be parallel with or substantially parallel with a transporting direction of the sorter. Especially, the curved portion of the set of tracks define an angle of 40-120°, such as 60-100°, such as 70-90° between one end and the opposite end. Especially, the tracks comprise straight portions, preferably arranged parallel with the transporting direction of the sorter. Such robotic actuator design with a curved portions which has an end portion parallel with the sorter transporting direction is suitable for acceleration of the gripped object up to the speed of the running sorter, thus allowing the object to be released on the sorter at the same speed of the sorter. The design is suited for embodiments where the feeder and sorter are parallel with each other.

The feeder and the sorter may be arranged to transport objects in directions being parallel at least along a part of the feeder where the plurality of pick and place robots are positioned. The feeder may arranged to transport objects on a surface at a first vertical level, wherein the sorter is arranged to transport objects on a surface at a second vertical level, wherein the second vertical level is higher than the first vertical level.

Preferably, the wherein the plurality of pick and place robots are arranged with a mutual distance so that a gripping area on the feeder of one pick and place robot does not overlap with a gripping area of a neighbour pick and place robot.

Especially, the plurality of pick and place robots are arranged with their main axes being parallel or substantially parallel.

The sorter system may comprise at least three pick and place robots, such as 3-6 pick and place robots, at respective positions along the feeder. The number may be higher than 6, to provide the required total pick and place capacity.

The feeder FC, e.g. feeder conveyor, may comprise a return loop part arranged to transport objects from a position downstream of the pick and place robots to a position upstream of at least one pick and place robot.

In a preferred, compact setup, the feeder and the sorter are placed adjacent to each other, wherein the feeder has a first side facing a first side of the sorter, and wherein the plurality of pick and place robots are positioned with their Cartesian or gantry configuration actuators supported in opposite ends by respective first and second supports, and wherein the first support is positioned to the second side of the feeder and the second support is positioned to the second side of the sorter.

Preferably, each of the plurality of pick and place robots has a controllable robotic actuator arranged to move its controllable gripper along three perpendicular axes.

In some embodiments, the sorter system comprises a mechanism arranged to move objects on the feeder upstream of the plurality of pick and place robots, so as to convert an incoming 3D bulk of objects into a 2D bulk of objects on a surface of the feeder. Especially, said image of objects on the feeder is provided of said 2D bulk of objects on the surface of the feeder. Such 3D to 2D bulk conversion by means of a simple push mechanism actuated by a linear actuator may increase capacity of the pick and place robots, since the gripping process is facilitated compared to gripping from a 3D bulk.

The control system is arranged to control a transporting speed of the feeder in at least two steps, such as at least three steps, such as in a plurality of steps between "stop" and a maximum speed, such as 2-10 steps between "stop" and a maximum speed. Especially, the control system may be arranged to control the speed of the feeder gradually over time in response to one or more inputs. Hereby, it is possible to adapt the feeder speed to the capacity of the cascade of pick and place robots. Specifically, the control system may be arranged to control the transporting speed of the feeder in response to an amount of incoming objects on the feeder. Specifically, the control system may be arranged to control the transporting speed of the feeder in response to an estimated capacity of each of the plurality of pick and place robots, so as to ensure an overall high pick and place efficiency.

The feeder may comprise a cascade of feeder sections, e.g. separate feeder sections, such as comprising a plurality of feeder sections being individually controllable with respect to transporting speed. Especially, the feeder comprises a plurality of feeder sections upstream of each of the pick and place robots. Especially, the feeder comprises a plurality of feeder sections upstream of each of a cascade of a plurality of pick and place robots, such as a cascade of 2-4 pick and place robots. Specifically, the control system is arranged to individually control transporting speed of each of said feeder sections. Hereby, the feeder speed can be dedicated to each cascade of 2-4 pick and place robots, which may increase overall capacity compared to varying transporting one common feeder speed. Especially, the sorter system may comprise a camera for each of the feeder sections to provide respective images upstream of or on each of the feeder sections. Especially, the control system may be arranged to individually control transporting speed of the feeder sections, so as to optimize an overall pick and place efficiency of the pick and place robots.

The control system may be arranged to control a transporting speed of the sorter, e.g. in response to one or more inputs. Especially, the control system may be arranged to temporarily lower a transporting speed of the sorter, so as to facilitate placing an object on the target position on the sorter by one of the pick and place robots.

The plurality of pick and place robots may comprise at least first and second pick and place robots with different picking properties. Especially, the first and second pick and place robots may have different controllable grippers. Especially, the first and second pick and place robots may have controllable grippers with different sizes, such as controllable grippers with different gripping elements configured for different engagement with an object for gripping the object, such as suction grippers and finger grippers. Especially, at least one of the plurality of pick and place robots has a controllable gripper which is detachably mounted to the robotic actuator, so as to allow replacement of the gripper during normal operation. Specifically, the control system may be configured to control said at least one pick and place robot to detach the controllable gripper and to attach another controllable gripper. Specifically, the control system may be configured to control said at least one pick and place robot to detach a controllable gripper with first gripping properties and to attach another controllable gripper with second gripping properties, wherein the first and second gripping properties are different. Specifically, the control system may be configured to control said at least one pick and place robot to perform said detaching and attaching in response to an input indicative of at least one property of incoming objects, such as an input generated in response to said image. Specifically, said at least one property of incoming objects may comprise a size of one or more incoming objects. Especially, the control system may be configured to cause said detaching an attaching to be performed in an automated process.

The control system may be arranged to categorize incoming objects and to distribute objects to be picked by the first and second pick and place robots in response to the categorization so as to match objects to be picked by the respective first and second pick and place robots to their picking properties. Especially, the control system may be arranged to estimate a capacity of each of the plurality of pick and place robots and to distribute objects to be picked by the respective pick and place robots in response to their estimated capacities, so as to optimize a total pick and place capacity.

The control system may be arranged to distribute objects to the pick and place robots taking into account their position in relation to the sorter combined with information indicative of available positions on the sorter.

The sorter system may comprise a sensor arranged to provide said image of objects on the feeder upstream of a position of the pick and place robots. Especially, the sorter system may comprise at least one sensor arranged to provide an image of objects on the feeder upstream of each of the pick and place robots, and wherein the control system is arranged to control each of the pick and place robots in response to said images. Especially, the sorter system comprises at least two sensors arranged at respective position to provide respective images of objects on the feeder upstream of respective cascades of at least two pick and place robots. Especially, said sensor or to provide the image(s) is/are configured to provide 3D images.

Each of, or at least one of, the plurality of pick and place robots may have controllable grippers comprising a base part mounted to the robotic actuator via a controllable rotation element to allow the base part to perform a controllable rotation around a rotation axis, and wherein the base part is further mounted to the robotic actuator via a controllable tilting element to allow the base part to perform a controllable tilt around a tilting axis. Especially, the controllable gripper may have a plurality of gripping elements arranged in a spatial configuration to cooperate in gripping an object, wherein the spatial configuration is variable by means of a controllable actuator system. Especially, controllable gripper has four elongated arms each with a suction cup, wherein the suction cups are arranged for vacuum engagement with the same surface of the object for gripping the object, and wherein the controllable actuator system is arranged to move the four elongated arms along their length direction, so as to allow the four suction cups to form various gripping quadrangle sizes. Hereby, a flexible gripper is provided which can be compressed to a compact size which facilitates manoeuvring in the gripping of objects from a 3D bulk without hitting other objects.

The mentioned tilt and rotation capability of the gripper, e.g. in combination with a controllable gripping configuration, are preferred features which help to pick up an object from a 3D bulk. Especially, this allows a rather simple Cartesian or gantry type robotic actuator to be used, and still allow a flexible and efficient gripping of objects from a 3D bulk. The tilt and rotation capability allows e.g. a suction cup type gripper to effectively approach an upper surface of a given object in spite of its shape and orientation, and it allows e.g. a plurality of suction cups to be oriented in a way for optimal position of the suction cups relative to the .

Specifically, the control system may be configured to cause the robotic actuator to change the gripper automatically to another gripper with different gripping properties, depending on incoming objects, so as to adapt gripping properties of the gripper for optimal gripping properties to the type of incoming objects. This may be implemented on one or more of the pick and place robots. Especially, the control system may cause changing of the gripper to a gripper with smaller or larger dimensions, respectively, so as to adapt to the size of incoming objects. Especially, the changing of gripper may be caused by the control system in response to the control system having performed statistics about one or more characteristics of incoming objects over a period of time. This may involve that the control system determines to change gripper on one or more pick and place robots in response to statistics about the incoming objects. Alternatively or additionally, the control system may be configured to receive an image of objects after being placed on the sorter to monitor pick and place efficiency of precision, and the control system may then be configured to cause change of the gripper on one or more pick and place robots in case the monitored pick and place efficiency or precision becomes outside a predetermined threshold value.

The sorter system may have pick and place robots each having a capacity for picking and placing at least 1,000 objects per hour.

The feeder may comprise a feeding conveyor, such as a plurality of feeding conveyor sections in a cascade. Especially, the feeder may comprise a loop to allow returning or manual handling of objects which have not been picked by the pick and place robots. Thus, preferably the feeder loop returns object downstream of the pick and place robots to a position upstream of the pick and place robots.

Each of the pick and place robots may have a gripping area having an area of 0.5-10 m², such as 0.5-5 m².

The sorter may be arranged to operate at a transporting speed of at least 1.0 m/s, such as at least 1.5 m/s, such as at least 2.0 m/s.

The sorter and the feeder may be configured to operate with their transport directions being opposite, such as the sorter and feeder being parallel and being configured to transport objects in opposite directions. Especially in combination with the feeder and sorter being placed adjacent to each other so as to occupy only a limited amount of space.

FIG. 6 illustrates steps of an embodiment of a method for feeding a sorter with objects from a feeder transporting objects in a 3D bulk. The method comprises the step of providing P_PP_R a plurality of pick and place robots at respective positions along the feeder so as to allow gripping of objects from respective gripping areas along the feeder. Each of the pick and place robots comprises a controllable gripper arranged to engage with a surface of an object to grip the object, preferably a plurality of suction cups, and a controllable robotic actuator arranged to move the controllable gripper between the feeder and the sorter, preferably a Cartesian og gantry based robotic actuator. Next, receiving R_I an image of objects upstream of a position of the pick and place robots, e.g. from a 3D image sensor or camera positioned above the feeder. Next, selecting S_O_P for each of the plurality of pick and place robots an object to grip in response to the image. Especially, the method may comprise receiving a plurality of images of objects at different positions along the feeder to provide further information of position of objects upstream of each pick and place robot in order to determine, for each pick and place robot, which object to be gripped as the next one. Next, determining D_TP for each of the plurality of pick and place robots a target position on the sorter, such as receiving information from a sorter controller to determine an empty space on the sorter. Next, controlling C_G_R the respective pick and place robots to grip their respective selected objects to grip from the feeder, to move the objects, and to release them at the respective determined target positions on the sorter, while the sorter is transporting objects in the transport direction.

Further steps may comprise providing an image of the target position on the sorter to determine if and how a handled object was successfully placed at the target position on the sorter. A machine learning algorithm may provide this image as input to continuously improve the performance of the robot system by modifying parameters of one or more of the described steps of selecting S_O_P which object to grip as the next one for each of the pick and place robots. Especially, a machine learning algorithm may be used to provide a coordinated distribution of objects to be gripped by the plurality of pick and place robots to optimize the overall pick and place performance.

It is to be understood that in principle, all types of objects or items can be handled by the described robot systems. I.e. objects or items can be of various shapes, sizes, and with various surface characteristics. Especially, the stream of objects or items arriving at the feeding conveyor FC may comprise at least one of: mail pieces, parcels, baggage, items handled at a warehouse distribution, and items handled at a mail order distribution centre, such as shoes, clothes, textiles etc. Especially, the robot system is designed for handling objects or items which have a maximum weight of 1-100 kg, such as 1-10 kg, such as a maximum weight of 2-3 kg. Especially, objects or items with a maximum weight of 2-3 kg can be picked up and moved at a high speed even with moderately sized robots. It is to be understood that the robot system can alternatively be designed for handling heavier objects than 100 kg.

It is understood that the function of control system is preferably implemented by a processor system. The processor may be a computerized controller including a digital processor executing the control algorithm which is implemented in software, so as to allow easy updating and adaptation of the function of the system, e.g. by changes in sorter configuration, and by including more pick and place robots to the system which need to be controlled in order to most effectively cooperate to handle the incoming stream of objects or items.

In some embodiments, the control system can be implemented by means of a Programmable Logic Controller (PLC). The processor may be or may comprise a dedicated robot controlling processor, or it may be implemented as part of or sharing the processor serving to control the sorter. Hereby, the addition of one or more pick and place robots to an existing sorter system may be implemented with a minimum of extra hardware for controlling the robot(s), and thus in such implementations, the program code for controlling the robot(s) can be implemented purely as processor executable program code. Likewise, the processor may be implemented as part of or sharing the processor serving to control the one or more induction for transporting items to the sorter. Still further, the processor may be implemented as part of or sharing the processor serving to control the feeder and/or the sorter, which may be advantageous to allow information from feeder and/or sorter to be used in the control of the pick and place robots. Yet other versions may have separate robot controls with interfaces to one common machine controller for controlling sorter, inductions and feeding conveyor(s). The machine controller may then have an interface to an overall system controller, which may have an interface to an ever higher order control, e.g. a Warehouse Management System (WMS).

The control system can be performed with many of its functions implemented as computer program code, and in practice the program code may be partly or fully integrated with existing systems for controlling the sorter. However, it may be preferred that the control system has two or more separate processors, e.g. a separate processor serving to perform at least some of the required image processing on one or a plurality of images, e.g. 3D images to provide a fast and precise identification of objects upstream of each of the pick and place robots. Embodiments of the pick and place robots have been tested, and it has obtained a capacity of up to 1,500-2,000 handled objects per hour with a rate of 100% successful picking and placing, where a 3D bulk of randomly shaped, sized, and textured objects arrive at a feeding conveyor at a speed of 0.1-1.0 m/s. In certain versions, a throughput of more than 2,000 objects per hour may be obtained.

To sum up: the invention in particular provides a sorter system with a cascade of pick and place robots picking randomly shaped and sized object from a continuously moving stream of objects in 3D bulk being transported on a feeder. The pick and place robots place objects directly on an empty space on the sorter, while the sorter is running. A control system processes images of objects upstream of a position of the pick and place robots and selects which object to grip for each of the pick and place robots. The pick and place robots may have Cartesian or gantry type robotic actuators, especially arranged with their main axes at an oblique angle with a transport direction of the sorter so as to facilitate acceleration of objects to the transporting speed of the sorter for release of the object on the sorter. The sorter and feeder may be parallel, e.g. placed close to each other and transporting objects in the same or opposite directions. The control system controls each of the robotic actuators to move their gripper to a position for gripping the selected object, and to move the gripper with the gripped object to a target position to release grip of the object and thus place the object directly on an empty space on the sorter.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

## Claims

1. A sorter system comprising
- a feeder (FC) arranged to transport objects of various shapes and sizes in a 3D bulk (BLK),
- a sorter (SRT) arranged to receive singulated objects and transport them to a discharge station, and
- a plurality of pick and place robots (R1, R2, R3), each comprising
- a controllable gripper (G) arranged to engage with a surface of an object to grip the object from the feeder (FC), and
- a controllable robotic actuator (RA) arranged to move the controllable gripper (G) between a gripping area (GA) on the feeder (FC) and a target area (TA) on the sorter (SRT),
wherein the plurality of pick and place robots are positioned at respective positions along the feeder (FC),
- a control system (CS) arranged to
- receive an image (IM) of objects (BLK) on the feeder (FC) upstream of a position of the pick and place robots,
- select for each of the plurality of pick and place robots an object to grip in response to the image (IM),
- determine for each of the plurality of pick and place robots (R1, R2, R3) a target position on the sorter (SRT), and
- control the respective pick and place robots (R1, R2, R3) to grip their respective selected objects to grip from the feeder (FC), to move the objects, and to release them at the respective determined target positions (TA) on the sorter (SRT), while the sorter (SRT) is transporting objects in the transport direction,
**characterized in that**
the plurality of pick and place robots comprise respective Cartesian or gantry controllable robotic actuators arranged with their main axes forming oblique angles with an axis along a transport direction of the sorter (SRT).

2. The sorter system according to claim 1, wherein the respective main axes form angles of 20-80°, 30-70°, such as 40-60°, with an axis along the transport direction of the sorter (SRT).

3. The sorter system according to claim 1 or 2, wherein each of the plurality of controllable robotic actuators (RA) are configured to move the controllable gripper within a horizontal working area defined by a first distance along the main axis, and a second distance along an axis perpendicular to the main axis, wherein the first distance is at least a factor of 2-4 times the second distance.

4. A method for feeding a sorter with objects from a feeder transporting objects in a 3D bulk, the method comprises
- providing (P_PP_R) a plurality of pick and place robots at respective positions along the feeder so as to allow gripping of objects from respective gripping areas along the feeder, wherein each of the pick and place robots comprises a controllable gripper arranged to engage with a surface of an object to grip the object, and a controllable robotic actuator arranged to move the controllable gripper between the feeder and the sorter, wherein the plurality of pick and place robots comprise respective Cartesian or gantry controllable robotic actuators arranged with their main axes forming oblique angles with an axis along a transport direction of the sorter,
- receiving (R_I) an image of objects upstream of a position of the pick and place robots, and
- selecting (S_O_P) for each of the plurality of pick and place robots an object to grip in response to the image,
- determining (D_TP) for each of the plurality of pick and place robots a target position on the sorter, and
- controlling (C_G_R) the respective pick and place robots to grip their respective selected objects to grip from the feeder, to move the objects, and to release them at the respective determined target positions on the sorter, while the sorter is transporting objects in the transport direction.

## Patentansprüche

1. Sortiersystem, umfassend
- eine Zuführvorrichtung (FC), die eingerichtet ist, um Gegenstände verschiedener Formen und Größen in einem 3D-Schüttgut (BLK) zu transportieren,
- eine Sortiervorrichtung (SRT), die eingerichtet ist, um vereinzelte Objekte zu empfangen und diese zu einer Abgabestation zu transportieren, und
- eine Vielzahl von Bestückungsrobotern (R1, R2, R3), die jeweils umfassen
- einen steuerbaren Greifer (G), der eingerichtet ist, um mit einer Oberfläche eines Objekts in Eingriff zu treten, um das Objekt von der Zuführvorrichtung (FC) zu greifen, und
- einen steuerbaren Roboter-Aktuator (RA), der eingerichtet ist, um den steuerbaren Greifer (G) zwischen einem Greifbereich (GA) auf der Zuführvorrichtung (FC) und einem Zielbereich (TA) auf der Sortiervorrichtung (SRT) zu bewegen,
wobei die Vielzahl von Bestückungsrobotern an jeweiligen Positionen entlang der Zuführvorrichtung (FC) positioniert sind,
- ein Steuersystem (CS), das eingerichtet ist zum
- Empfangen eines Bilds (IM) von Objekten (BLK) auf der Zuführvorrichtung (FC) stromaufwärts einer Position der Bestückungsroboter,
- Auswählen, für jeden der Vielzahl von Bestückungsrobotern, eines zu greifenden Objekts als Reaktion auf das Bild (IM),
- Bestimmen, für jeden der Vielzahl von Bestückungsrobotern (R1, R2, R3), einer Zielposition auf der Sortiervorrichtung (SRT), und
- Steuern der jeweiligen Bestückungsroboter (R1, R2, R3), um ihre jeweiligen ausgewählten zu greifenden Objekte von der Zuführvorrichtung (FC) zu greifen, um die Objekte zu bewegen und um sie an den jeweiligen bestimmten Zielpositionen (TA) auf der Sortiervorrichtung (SRT) freizugeben, während die Sortiervorrichtung (SRT) Objekte in der Transportrichtung transportiert,
**dadurch gekennzeichnet, dass**
die Vielzahl von Bestückungsrobotern jeweilige kartesische oder Portal-steuerbare Roboteraktuatoren umfasst, die eingerichtet sind, dass ihre Hauptachsen schiefe Winkel mit einer Achse entlang einer Transportrichtung der Sortiervorrichtung (SRT) ausbilden.

2. Sortiersystem nach Anspruch 1, wobei die jeweiligen Hauptachsen Winkel von 20-80°, 30-70°, wie 40-60°, mit einer Achse entlang der Transportrichtung der Sortiervorrichtung (SRT) ausbilden.

3. Sortiersystem nach Anspruch 1 oder 2, wobei jeder der Vielzahl von steuerbaren Roboteraktuatoren (RA) konfiguriert ist, um den steuerbaren Greifer innerhalb eines horizontalen Arbeitsbereichs zu bewegen, der durch eine erste Entfernung entlang der Hauptachse und eine zweite Entfernung entlang einer Achse senkrecht zu der Hauptachse definiert ist, wobei die erste Entfernung mindestens das Zwei- bis Vierfache der zweiten Entfernung beträgt.

4. Verfahren zum Zuführen von Objekten aus einer Zuführvorrichtung, die Objekte in einem 3D-Schüttgut transportiert, zu einer Sortiervorrichtung, wobei das Verfahren umfasst
- Bereitstellen (P_PP_R) einer Vielzahl von Bestückungsrobotern an jeweiligen Positionen entlang der Zuführvorrichtung, um ein Greifen von Objekten aus jeweiligen Greifbereichen entlang der Zuführvorrichtung zu ermöglichen, wobei jeder der Bestückungsroboter einen steuerbaren Greifer, der eingerichtet ist, um mit einer Oberfläche eines Objekts in Eingriff zu kommen, um das Objekt zu greifen, und einen steuerbaren Roboteraktuator umfasst, der eingerichtet ist, um den steuerbaren Greifer zwischen der Zuführvorrichtung und der Sortiervorrichtung zu bewegen, wobei die Vielzahl von Bestückungsrobotern jeweilige kartesische oder Portal-steuerbare Roboteraktuatoren umfasst, die eingerichtet sind, dass ihre Hauptachsen schiefe Winkel mit einer Achse entlang einer Transportrichtung der Sortiervorrichtung ausbilden,
- Empfangen (R_I) eines Bildes von Objekten stromaufwärts einer Position der Bestückungsroboter, und
- Auswählen (S_O_P), für jeden der Vielzahl von Bestückungsrobotern, eines zu greifenden Objekts als Reaktion auf das Bild,
- Bestimmen (D_TP), für jeden der Vielzahl von Bestückungsrobotern, einer Zielposition auf der Sortiervorrichtung, und
- Steuern (C_G_R) der jeweiligen Bestückungsroboter, um ihre jeweiligen ausgewählten zu greifenden Objekte von der Zuführvorrichtung zu greifen, um die Objekte zu bewegen und um sie an den jeweiligen bestimmten Zielpositionen auf der Sortiervorrichtung freizugeben, während die Sortiervorrichtung Objekte in der Transportrichtung transportiert.

## Revendications

1. Système de triage comprenant
- un alimenteur (FC) conçu pour transporter des objets de formes et de tailles diverses dans un vrac 3D (BLK),
- une trieuse (SRT) conçue pour recevoir des objets isolés et les transporter vers une station de déchargement, et
- une pluralité de robots de prélèvement et de dépose (R1, R2, R3), chacun comprenant
- un préhenseur commandable (G) conçu pour s'engager dans la surface d'un objet pour saisir l'objet depuis l'alimenteur (FC), et
- un actionneur robotique commandable (RA) conçu pour déplacer le préhenseur commandable (G) entre une zone de préhension (GA) sur le dispositif d'alimentation (FC) et une zone cible (TA) sur la trieuse (SRT),
dans lequel la pluralité de robots de prélèvement et de dépose sont placés à des positions respectives le long du dispositif d'alimentation (FC),
- un système de commande (CS) conçu pour
- recevoir une image (IM) des objets (BLK) sur l'alimenteur (FC) en amont d'une position des robots de prélèvement et de dépose,
- sélectionner, pour chacun de la pluralité de robots de prélèvement et de dépose, un objet à saisir en réponse à l'image (IM),
- déterminer pour chacun de la pluralité de robots de prélèvement et de dépose (R1, R2, R3)é, une position cible sur la trieuse (SRT), et
- commander les robots de prélèvement et de dépose respectifs (R1, R2, R3) pour saisir leurs objets sélectionnés respectifs depuis l'alimenteur (FC), pour déplacer les objets, et les déposer aux positions cibles respectives déterminées (TA) sur la trieuse (SRT), pendant que la trieuse (SRT) transporte les objets dans la direction de transport,
**caractérisé en ce que**
la pluralité de robots de prélèvement et de dépose comprennent des actionneurs robotiques commandables respectifs de type cartésien ou portique, disposés de manière à ce que leurs axes principaux forment des angles obliques avec un axe suivant la direction de transport de la trieuse (SRT).

2. Système de triage selon la revendication 1, dans lequel les axes principaux respectifs forment des angles de 20-80°, 30-70°, tels que 40-60°, avec un axe le long de la direction de transport de la trieuse (SRT).

3. Système de triage selon la revendication 1 ou 2, dans lequel chacun des actionneurs robotiques commandables (RA) de la pluralité est configuré pour déplacer le préhenseur commandable dans une zone de travail horizontale définie par une première distance le long de l'axe principal, et une seconde distance le long d'un axe perpendiculaire à l'axe principal, la première distance est au moins 2 à 4 fois supérieure à la seconde distance.

4. Procédé d'alimentation d'une trieuse avec des objets à partir d'un dispositif d'alimentation transportant des objets en vrac 3D, le procédé comprend
- la fourniture (P_PP_R) d'une pluralité de robots de prélèvement et de dépose à des emplacements respectifs le long de l'alimenteur, de manière à permettre la saisie d'objets depuis des zones de saisie respectives le long de l'alimenteur, dans lequel chaque robot de prélèvement et de dépose comprend un préhenseur commandable conçu pour entrer en contact avec une surface d'un objet pour le saisir, et un actionneur robotique commandable conçu pour déplacer le préhenseur commandable entre l'alimenteur et la trieuse, dans lequel la pluralité de robots de prélèvement et de dépose comprend des actionneurs robotiques commandables respectifs de type cartésien ou portique, disposés de manière à ce que leurs axes principaux forment des angles obliques avec un axe suivant la direction de transport de la trieuse,
- la réception (R_I) d'une image d'objets en amont d'une position des robots de prélèvement et de dépose, et
- la sélection (S_O_P) pour chacun de la pluralité de robots de prélèvement et de dépose d'un objet à saisir en réponse à l'image,
- la détermination (D_TP) pour chacun de la pluralité de robots de prélèvement et de dépose, d'une position cible sur la trieuse, et
- la commande (C_G_R) des robots de prélèvement et de dépose respectifs pour saisir leurs objets sélectionnés respectifs depuis l'alimenteur, pour déplacer les objets, et les déposer aux positions cibles respectives déterminées sur la trieuse, pendant que la trieuse transporte les objets dans la direction de transport.
